# EUROPÄISCHE PATENTSCHRIFT

(11) **EP 2 029 385 B1**
(45) Veröffentlichungstag und Bekanntmachung des Hinweises auf die Patenterteilung: **30.11.2011**
(21) Anmeldenummer: 07727680.6
(22) Anmeldetag: 03.04.2007
(51) Int. Cl.: B60K 20/02, F16H 59/02, F16H 61/24

(54) **SCHALTVORRICHTUNG FÜR EIN GETRIEBE**
SHIFT DEVICE FOR A GEARBOX
DISPOSITIF DE SÉLECTION D'UNE BOÎTE DE VITESSES

(30) Priorität: 26.05.2006 DE 102006024636
(43) Veröffentlichungstag der Anmeldung: 04.03.2009
(73) Patentinhaber: Schaeffler Technologies GmbH & Co. KG, 91074 Herzogenaurach (DE)
(72) Erfinder: MEHLIS, Thomas, 91077 Kleinsendelbach (DE); KRÄMER, Klaus, 91460 Baudenbach (DE); LÖFFELMANN, Jochen, 96158 Frensdorf (DE)
(86) Internationale Anmeldenummer: PCT/EP2007/053209
(87) Internationale Veröffentlichungsnummer: WO 2007/137895

(56) Entgegenhaltungen:
- EP-A1- 1 116 902
- DE-A1- 10 111 911
- DE-A1- 10 138 729
- DE-A1- 10 210 972
- DE-A1- 19 754 760
- FR-A1- 2 803 252
- JP-A- 8 210 411

## Beschreibung

### Gebiet der Erfindung

Die Erfindung betrifft eine Schaltvorrichtung für ein Getriebe, insbesondere für ein Zahnräderwechselgetriebe eines Kraftfahrzeugs, die eine mittels eines Schalthebels betätigbare, insbesondere schwenkbare, Schaltwelle aufweist, wobei die Schaltwelle in einem Gehäuse oder an einem Träger gelagert ist, wobei die Schaltwelle mittels des Schalthebels um eine Drehachse gedreht werden kann, wobei die Schaltwelle relativ zu dem Gehäuse oder dem Träger axial verschoben werden kann, wobei die Schaltwelle in drehfester Verbindung mit einer Zusatzmasse steht und wobei die Zusatzmasse um die Drehachse drehbar angeordnet ist.

### Hintergrund der Erfindung

Eine solche Schaltvorrichtung ist aus der DE 101 11 911 A1 bekannt. Dort ist eine Schaltwelle an einem Träger bzw. an einem Gehäuseteil gelagert, das Bestandteil des Getriebes ist, wobei die Schaltwelle in bekannter Weise um eine Drehachse drehbar und in Richtung der Drehachse axial verschiebbar angeordnet ist. Die offenbarte Betätigungseinheit für das Schaltgetriebe weist zur Bewegung der Schaltwelle einen Schalthebel auf, an dem über einen Ausleger eine Zusatzmasse angeordnet ist, die von der Drehachse der Schaltwelle einen Abstand hat. Zweck der Zusatzmasse ist es, Kraftspitzen abzubauen, die bei Schaltvorgängen in Kraftfahrzeug-Zahnräderwechselgetriebe infolge schneller Schaltvorgänge auftreten können und die eine hohe Belastung für die Betätigungseinheit darstellen. Der Schalthebel samt Zusatzmasse bildet eine starre Einheit, die um die Drehachse der Schaltwelle - drehfest mit der Schaltwelle verbunden - schwenken kann, die jedoch bei einer axialen Verschiebung der Schaltwelle diese Axialbewegung nicht mitmacht, sondern axial fest in dem Gehäuse bzw. an dem Träger angeordnet ist.

Nachteilig ist es bei der vorbekannten Lösung, dass im Bereich des Schalthebels, an dem die Zusatzmasse angeordnet ist, konzeptbedingt ein hinreichender Bauraum für die Zusatzmasse zur Verfügung stehen muss. Es gibt jedoch Konstruktionen, bei denen an dem Ort, an dem der Schalthebel an der Schaltwelle angreifen muss, nicht genügend Platz zur Verfügung steht, um die Zusatzmasse mit an dem Schalthebel anzubringen. Die EP 1116902 A beschreibt eine Schaltvorrichtung nach dem Oberbegriff des Anspruchs 1.

### Aufgabe der Erfindung

Der vorliegenden Erfindung liegt daher die Aufgabe zugrunde, eine Schaltvorrichtung der eingangs genannten Art so fortzubilden, dass die Anordnung einer Zusatzmasse auch in dem Falle in einfacher Weise möglich wird, wenn der für die Zusatzmasse benötigte Raum nicht im Bereich des Schalthebels zur Verfügung steht. Die konstruktive Ausgestaltung der Schaltvorrichtung soll damit universeller bzw. flexibler werden.

### Zusammenfassung der Erfindung

Der Erfindungsgedanke stellt also darauf ab, dass die Schaltvorrichtung sowohl mit einem Schalthebel als auch mit einer Zusatzmasse ausgestattet ist, dass jedoch diese beiden Bauelemente an verschiedenen Ort und insbesondere in axialem Abstand an der Schaltwelle angeordnet sind, wobei zwar sowohl der Schalthebel als auch die Zusatzmasse in Drehverbindung mit der Schaltwelle stehen, dass jedoch keine direkte Kopplung zwischen den beiden genannten Bauteilen bzw. keine direkte Verbindung zwischen diesen vorliegt.

Die Zusatzmasse ist ringförmig ausgebildet und konzentrisch um die Schaltwelle angeordnet.

Die Zusatzmasse ist gemäß einer bevorzugten Ausführungsform der Erfindung in einem axialen Endbereich der Schaltwelle angeordnet.

Zwischen Gehäuse und Zusatzmasse ist eine Lageranordnung angeordnet, die eine Drehkopplung zwischen der Schaltwelle und der Zusatzmasse bei relativer axialer Verschieblichkeit zwischen der Schaltwelle und der Zusatzmasse herstellt. Die Lageranordnung kann dabei eine mit der Schaltwelle fest verbundene Innenhülse aufweisen die in Richtung der Drehachse verlaufende Laufbahnen für Wälzkörper aufweist. Die Schaltwelle kann dabei mit der Innenhülse durch eine Presspassung verbunden sein, d. h. die Innenhülse ist in diesem Falle auf die Schaltwelle aufgepresst. Ferner kann die Lageranordnung weiterhin eine über die Wälzkörper mit der Innenhülse zusammenwirkende Au-ßenhülse aufweisen, die in Richtung der Drehachse verlaufende Laufbahnen für die Wälzkörper aufweist.

Hiermit kann in einfacher Weise eine drehfeste Verbindung zwischen der Schaltwelle und der Zusatzmasse hergestellt werden. Dabei ist bevorzugt weiterhin vorgesehen, dass sich die Außenhülse axial bis in den Bereich der Zusatzmasse erstreckt. Die Außenhülse kann dabei zumindest über einen axialen Abschnitt bzw. einen Teil der axialen Erstreckung in einer Bohrung in der Zusatzmasse angeordnet sein. Auch in diesem Falle kann die Außenhülse mit Presspassung in der Bohrung angeordnet sein, d. h. die Außenhülse ist in diesem Falle in die Bohrung in der Zusatzmasse eingepresst.

Besonders bevorzugt ist weiterhin vorgesehen, dass die Außenhülse von einem Gleitlagerelement zumindest teilweise umgeben ist. Das Gleitlagerelement kann dabei konzentrisch in einer Bohrung im Gehäuse angeordnet sein. Auch in diesem Falle kann das Gleitlagerelement in der Bohrung mit Presspassung angeordnet sein, d. h. es kann in diese eingepresst sein.

Das Gleitlagerelement kann einen sich radial erstreckenden Abschnitt aufweisen, der als axiales Lager dient. Der sich radial erstreckenden Abschnitt kann in diesem Falle zwischen dem Gehäuse und der Zusatzmasse angeordnet sein.

Damit einerseits eine drehfeste Verbindung zwischen dem Gehäuse und der Zusatzmasse hergestellt wird, die andererseits jedoch eine axiale Relativverschiebung zulässt, sind vorzugsweise in der Innenhülse oder der Außenhülse der Lageranordnung Elemente angeordnet, die die axiale Verschiebung der Wälzkörper relativ zu einer der Hülsen begrenzen. Insbesondere kann die Innenhülse axiale Anlaufborde für die Wälzkörper aufweisen.

Die Wälzkörper sind nach einer bevorzugten Ausführungsform Nadeln; es können aber auch beispielsweise Kugeln eingesetzt werden.

Insgesamt ergibt sich mit dem Erfindungsvorschlag eine vollständige Trennung der Wirkungsorte des Schalthebels auf der einen Seite und der Zusatzmasse auf der anderen Seite. Dennoch ist eine einfache und damit kostengünstige Konstruktion gegeben.

### Kurze Beschreibung der Figuren

In den Zeichnungen ist ein Ausführungsbeispiel der Erfindung dargestellt. Es zeigen:
- Fig. 1: einen Teil einer Schaltvorrichtung für ein Zahnräderwechselgetriebe eines Kraftfahrzeugs in geschnittener Darstellung und in der Seitenansicht und
- Fig. 2: den Schnitt A-B gemäß Fig. 1.

### Ausführliche Beschreibung der Figuren

In den Figuren ist eine Schaltvorrichtung 1 für ein Zahnräderwechselgetriebe eines Kraftfahrzeugs zu sehen, wobei nur die hier interessierenden Bauteile dargestellt sind. Ein (nicht dargestellter) Handschalthebel greift über ein geeignetes Gestänge oder Kabel an einem Schalthebel 2 an, der damit entsprechend betätigt wird. Der Schalthebel 2 ist drehfest, jedoch axial verschieblich an einer Schaltwelle 3 befestigt, die mittels eines (nicht dargestellten) Schaltfingers die Wechselzahnräder des Getriebes in oder außer Eingriff bringt. Einzelheiten hierzu sind in der DE 101 11 911 A1 offenbart, auf die insoweit ausdrücklich Bezug genommen wird.

Der Schalthebel 2 ist an einem plattenartigen Träger 20, der Bestandteil des Getriebegehäuses 4 ist, axial unverschieblich, jedoch um die Drehachse 5 der Schaltwelle 3 schwenkbar gelagert. Nur schematisch ist eine Lagerbuchse 21 skizziert, mit der dies angedeutet wird.

Im unteren Bereich des Gehäuses 4 ist diese topfförmig ausgebildet und stellt eine Lagerstelle für die Schaltwelle 3 dar. Die Lagerung der Schaltwelle 3 in ihrem einen axialen Endbereich 8 erfolgt über eine Lageranordnung 9. Die Lageranordnung 9 lagert auch eine ringförmig ausgebildete Zusatzmasse 6, die das Massenträgheitsmoment der Schaltwelle 3 bei deren Drehung um die Drehachse 5 vergrößert, um Kraftspitzen infolge schneller Schaltvorgänge abbauen zu können.

Die Lageranordnung 9 stellt dabei - wie noch im Einzelnen zu sehen sein wird - sicher, dass die Schaltwelle 3 drehfest mit der Zusatzmasse 6 verbunden ist, dass jedoch eine Relativbewegung in axialer Richtung zwischen Schaltwelle 3 und Zusatzmasse 6 möglich ist. D. h. bei der Drehung der Schaltwelle 6, hervorgerufen durch die Schwenkung des Schalthebels 2, dreht sich die Zusatzmasse 6 mit der Schaltwelle 3 mit; bei einer axialen Verschiebung der Schaltwelle 3 bleibt die Zusatzmasse 6 indes axial ortsfest.

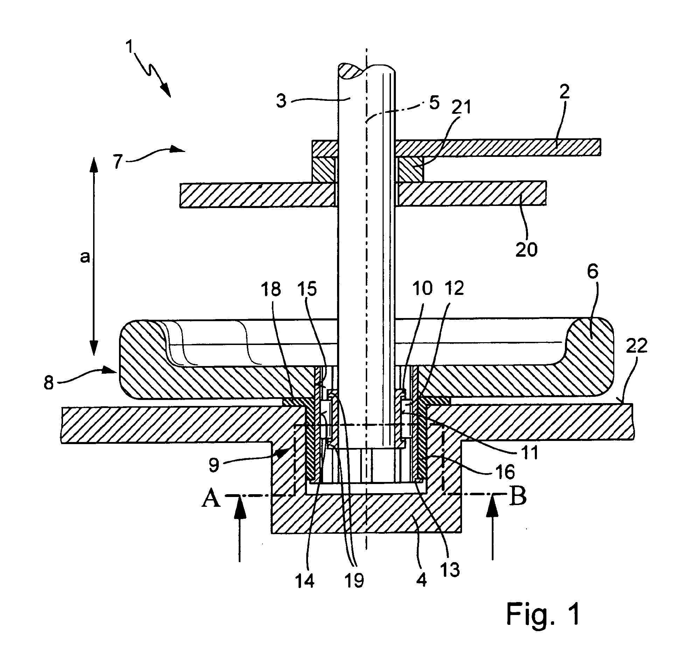

Wie in Fig. 1 zu sehen ist, befindet sich der Schalthebel 2 an einem ersten Ort 7, d. h. an einer ersten Axialposition der Schaltwelle 3. Die Zusatzmasse 6 ist hingegen an einem zweiten Ort 8 angeordnet, vorliegend im axialen Endbereich der Schaltwelle 3. Beide Orte 7, 8 befinden sich in einem axialen Abstand a. Damit ist insoweit die Ankopplung des Schalthebels 2 an die Schaltwelle 3 von der Ankopplung der Zusatzmasse 6 an diese getrennt. Dies ermöglicht einen entsprechenden konstruktiven Freiheitsgrad, da im Bereich des ersten Ortes 7, also dort, wie die Ankopplung des Schalthebels 2 an die Schaltwelle 3 erfolgt, ein geringerer Bauraum als bei vorbekannten Lösungen benötigt wird.

Die Lageranordnung 9 weist zunächst eine Innenhülse 10 und eine Außenhülse 13 auf, zwischen denen Wälzkörper 12 - vorliegend in Form von Nadeln - angeordnet sind. Hierfür sind Laufbahnen 11 bzw. 14 in die Innenhülse 10 bzw. in die Außenhülse 13 eingearbeitet, die sich in Richtung der Drehachse 5 der Schaltwelle 3 erstrecken. Die Innenhülse 10 hat in ihren beiden axialen Endbereichen Anlaufborde 19, die einen axialen Anschlag für die Nadeln 12 darstellen. Derartige Borde fehlen an den Laufbahnen der Außenhülse 13, so dass die relative axiale Verschiebung beider Hülsen 10, 13 gewährleistet ist.

Die Innenhülse 10 ist auf den axialen Endbereich 8 der Schaltwelle 3 aufgepresst. Die Außenhülse 13 ist axial so lange ausgebildet, dass ihr einer Endbereich in eine Bohrung 15 hineinreicht, die in die Zusatzmasse 6 eingearbeitet ist. Auch hier ist vorgesehen, dass die Außenhülse 13 mit Presspassung in der Bohrung 15 der Zusatzmasse 6 sitzt, d. h. die Außenhülse 13 ist in die Bohrung 15 eingepresst.

Die Lagerung der Zusatzmasse 6 zum Gehäuse 4 wird über ein Gleitlagerelement 16 hergestellt. Dieses besteht aus einem hülsenförmigen Körper beispielsweise aus reibungsarmem Kunststoff oder aus metallischem Gleitlagermaterial, das in seinem einen axialen Endbereich einen sich radial erstreckenden Abschnitt 18 aufweist, also eine flanschartige radiale Verbreiterung. Das Gleitlagerelement 16 ist in eine Bohrung 17 im Gehäuse 4 eingepresst, bis der sich radial erstreckende Abschnitt 18 an einer oberen Planfläche 22 des Gehäuses 4 anliegt. Im montierten Zustand liegt damit der sich radial erstreckende Abschnitt 18 zwischen der Zusatzmasse 6 und der Planfläche 22 des Gehäuses 4. Radial führt das Gleitlagerelement 16 das Gehäuse 4 zur Außenhülse 13.

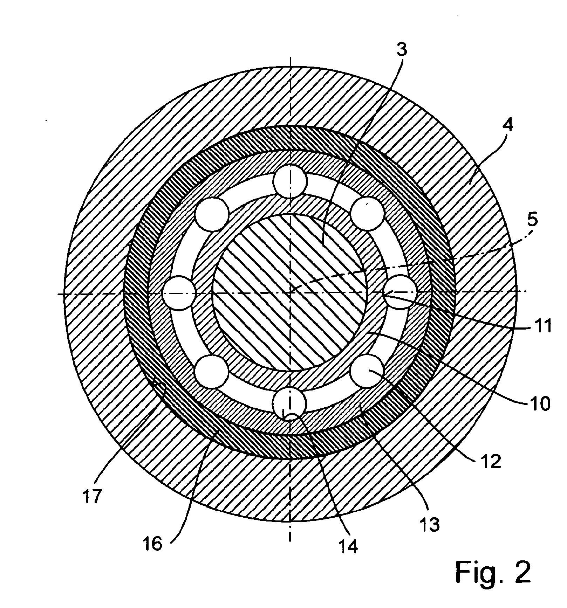

Wie in Fig. 2 gesehen werden kann, sind mehrere über den Umfang verteilt angeordnete Nadeln 12 vorgesehen, vorliegend insgesamt acht Stück. Nicht dargestellt ist ein Käfig, der die einzelnen Nadeln 12 hält. Die Lageranordnung 9 sorgt dafür, dass beim Schalten, d. h. namentlich beim Drehen der Schaltwelle 3, konstante Reibwerte herrschen. Ferner verhindert die Lageranordnung 9 ein axiales Wandern der Zusatzmasse 6 bei der axialen Verschiebung der Schaltwelle 3.

### Bezugszeichenliste

- 1: Schaltvorrichtung
- 2: Schalthebel
- 3: Schaltwelle
- 4: Gehäuse
- 5: Drehachse
- 6: Zusatzmasse
- 7: erster Ort
- 8: zweiter Ort (axialer Endbereich)
- 9: Lageranordnung
- 10: Innenhülse
- 11: Laufbahn
- 12: Wälzkörper
- 13: Außenhülse
- 14: Laufbahn
- 15: Bohrung
- 16: Gleitlagerelement
- 17: Bohrung
- 18: sich radial erstreckender Abschnitt
- 19: Anlaufbord
- 20: Träger
- 21: Lagerbuchse
- 22: Planfläche
- a: Abstand

## Patentansprüche

1. Schaltvorrichtung (1) für ein Getriebe, insbesondere für ein Zahnräderwechselgetriebe eines Kraftfahrzeugs, die eine mittels eines Schalthebels (2) betätigbare, insbesondere schwenkbare, Schaltwelle (3) aufweist, wobei die Schaltwelle (3) in einem Gehäuse (4) oder an einem Träger gelagert ist, wobei die Schaltwelle (3) mittels des Schalthebels (2) um eine Drehachse (5) gedreht werden kann, wobei die Schaltwelle (3) relativ zu dem Gehäuse (4) oder dem Träger axial verschoben werden kann, wobei die Schaltwelle (3) in drehfester Verbindung mit einer Zusatzmasse (6) steht, wobei die Zusatzmasse (6) um die Drehachse (5) drehbar angeordnet ist und wobei der Schalthebel (2) und die Zusatzmasse (6) an zwei voneinander beabstandeten Orten (7, 8) mit der Schaltwelle (3) in Drehverbindung stehen, ***dadurch gekennzeichnet, dass** die Zusatzmasse (6) ringförmig ausgebildet und konzentrisch um die Schaltwelle (3) angeordnet ist und dass zwischen Gehäuse (4) und Zusatzmasse (6) eine Lageranordnung (9) angeordnet ist, die eine Drehkopplung zwischen der Schaltwelle (3) und der Zusatzmasse (6) bei relativer axialer Verschieblichkeit zwischen der Schaltwelle (3) und der Zusatzmasse (6) herstellt.*

2. Schaltvorrichtung nach Anspruch 1, **dadurch gekennzeichnet, dass** die Zusatzmasse (6) in einem axialen Endbereich (8) der Schaltwelle (3) angeordnet ist.

3. Schaltvorrichtung nach Anspruch 1, **dadurch gekennzeichnet, dass** die Lageranordnung (9) eine mit der Schaltwelle (3) fest verbundene Innenhülse (10) aufweist, die in Richtung der Drehachse (5) verlaufende Laufbahnen (11) für Wälzkörper (12) aufweist.

4. Schaltvorrichtung nach Anspruch 3, **dadurch gekennzeichnet, dass** die Schaltwelle (3) mit der Innenhülse (10) durch eine Presspassung verbunden ist.

5. Schaltvorrichtung nach Anspruch 3, **dadurch gekennzeichnet, dass** die Lageranordnung (9) weiterhin eine über die Wälzkörper (12) mit der Innenhülse (10) zusammenwirkende Außenhülse (13) aufweist, die in Richtung der Drehachse (5) verlaufende Laufbahnen (14) für die Wälzkörper (12) aufweist.

6. Schaltvorrichtung nach Anspruch 5, **dadurch gekennzeichnet, dass** sich die Außenhülse (13) axial bis in den Bereich der Zusatzmasse (6) erstreckt.

7. Schaltvorrichtung nach Anspruch 6, **dadurch gekennzeichnet, dass** die Außenhülse (13) zumindest über einen axialen Abschnitt in einer Bohrung (15) in der Zusatzmasse (6) angeordnet ist.

8. Schaltvorrichtung nach Anspruch 97, **dadurch gekennzeichnet, dass** die Außenhülse (13) mit Presspassung in der Bohrung (15) angeordnet ist.

9. Schaltvorrichtung nach Anspruch 75, **dadurch gekennzeichnet, dass** die Außenhülse (13) von einem Gleitlagerelement (16) zumindest teilweise umgeben ist.

10. Schaltvorrichtung nach Anspruch 9, **dadurch gekennzeichnet, dass** das Gleitlagerelement (16) konzentrisch in einer Bohrung (17) im Gehäuse (4) angeordnet ist.

11. Schaltvorrichtung nach Anspruch 10, **dadurch gekennzeichnet, dass** das Gleitlagerelement (16) in der Bohrung (17) mit Presspassung angeordnet ist.

12. Schaltvorrichtung nach Anspruch 9, **dadurch gekennzeichnet, dass** das Gleitlagerelement (16) einen sich radial erstreckenden Abschnitt (18) aufweist.

13. Schaltvorrichtung nach Anspruch 12, **dadurch gekennzeichnet, dass** der sich radial erstreckenden Abschnitt (18) zwischen dem Gehäuse (4) und der Zusatzmasse (6) angeordnet ist.

14. Schaltvorrichtung nach Anspruch 63, **dadurch gekennzeichnet, dass** die Innenhülse (10) axiale Anlaufborde (19) für die Wälzkörper (12) aufweist.

15. Schaltvorrichtung nach Anspruch 63, **dadurch gekennzeichnet, dass** die Wälzkörper (12) Nadeln sind.

16. Schaltvorrichtung nach Anspruch 3, **dadurch gekennzeichnet, dass** die Wälzkörper (12) Kugeln sind.

## Claims

1. Shift device (1) for a transmission, in particular for a gear change transmission of a motor vehicle, which shift device has a shift shaft (3) which can be actuated, in particular pivoted, by means of a shift lever (2), wherein the shift shaft (3) is mounted in a housing (4) or on a carrier, wherein the shift shaft (3) can be rotated by means of the shift lever (2) about an axis of rotation (5), wherein the shift shaft (3) can be displaced axially relative to the housing (4) or the carrier, wherein the shift shaft (3) is connected to an additional mass (6) in a rotationally conjoint manner, wherein the additional mass (6) is arranged so as to be rotatable about the axis of rotation (5), and wherein the shift lever (2) and the additional mass (6) are rotationally connected to the shift shaft (3) at two spaced-apart locations (7, 8), **characterized in that** the additional mass (6) is of annular design and is arranged concentrically around the shift shaft (3), and **in that** a bearing arrangement (9) is arranged between the housing (4) and additional mass (6), which bearing arrangement produces rotational coupling between the shift shaft (3) and the additional mass (6) while allowing a relative axial displacement between the shift shaft (3) and the additional mass (6).

2. Shift device according to Claim 1, **characterized in that** the additional mass (6) is arranged in an axial end region (8) of the shift shaft (3).

3. Shift device according to Claim 1, **characterized in that** the bearing arrangement (9) has an inner sleeve (10) which is fixedly connected to the shift shaft (3) and which has raceways (11), which run in the direction of the axis of rotation (5), for rolling bodies (12).

4. Shift device according to Claim 3, **characterized in that** the shift shaft (3) is connected to the inner sleeve (10) by means of an interference fit.

5. Shift device according to Claim 3, **characterized in that** the bearing arrangement (9) also has an outer sleeve (13) which interacts with the inner sleeve (10) via the rolling bodies (12) and which has raceways (14), which run in the direction of the axis of rotation (5), for the rolling bodies (12).

6. Shift device according to Claim 5, **characterized in that** the outer sleeve (13) extends axially into the region of the additional mass (6).

7. Shift device according to Claim 6, **characterized in that** the outer sleeve (13) is arranged, at least over one axial portion, in a bore (15) in the additional mass (6).

8. Shift device according to Claim 7, **characterized in that** the outer sleeve (13) is arranged in the bore (15) with an interference fit.

9. Shift device according to Claim 5, **characterized in that** the outer sleeve (13) is at least partially surrounded by a plain bearing element (16).

10. Shift device according to Claim 9, **characterized in that** the plain bearing element (16) is arranged concentrically in a bore (17) in the housing (4).

11. Shift device according to Claim 10, **characterized in that** the plain bearing element (16) is arranged in the bore (17) with an interference fit.

12. Shift device according to Claim 9, **characterized in that** the plain bearing element (16) has a radially extending portion (18).

13. Shift device according to Claim 12, **characterized in that** the radially extending portion (18) is arranged between the housing (4) and the additional mass (6).

14. Shift device according to Claim 3, **characterized in that** the inner sleeve (10) has axial run-on rims (19) for the rolling bodies (12).

15. Shift device according to Claim 3, **characterized in that** the rolling bodies (12) are needles.

16. Shift device according to Claim 3, **characterized in that** the rolling bodies (12) are balls.

## Revendications

1. Dispositif de sélection de boîte de vitesses (1) pour une boîte de vitesses, notamment pour une boîte à engrenages d'un véhicule automobile, qui comporte un arbre de sélection de boîte de vitesses (3) actionnable, notamment basculable, à l'aide d'un levier de sélection de boîte de vitesses (2), l'arbre de sélection de boîte de vitesses (3) étant disposé dans un carter (4) ou sur un support, l'arbre de sélection de boîte de vitesses (3) pouvant être tourné autour d'un axe de rotation (5) à l'aide du levier de sélection de boîte de vitesses (2), l'arbre de sélection de boîte de vitesses (3) pouvant être poussé dans le plan axial par rapport au carter (4) ou au support, l'arbre de sélection de boîte de vitesses (3) étant en liaison solidaire en rotation avec une masse supplémentaire (6), la masse supplémentaire (6) étant disposée de façon à pouvoir tourner autour de l'axe de rotation (5) et le levier de sélection de boîte de vitesses (2) et la masse supplémentaire (6) étant reliés dans leur pivotement par l'arbre de sélection de boîte de vitesses (3) au niveau de deux régions (7, 8) séparées, **caractérisé en ce que** la masse supplémentaire (6) prend une forme d'anneau et est disposée concentriquement autour de l'arbre de sélection de boîte de vitesses (3) et qu'un agencement de palier de roulement (9) est disposé entre le carter (4) et la masse supplémentaire (6) et qu'il permet de réaliser un couplage pivotant entre l'arbre de sélection de boîte de vitesses (3) et la masse supplémentaire (6) en présence d'un coulissement axial relatif entre l'arbre de sélection de boîte de vitesses (3) et la masse supplémentaire (6).

2. Dispositif de sélection de boîte de vitesses selon la revendication 1, **caractérisé en ce que** la masse supplémentaire (6) est disposée dans une zone d'extrémité (8) axiale de l'arbre de sélection de boîte de vitesses (3).

3. Dispositif de sélection de boîte de vitesses selon la revendication 1, **caractérisé en ce que** l'agencement de palier de roulement (9) comporte un fourreau intérieur (10) relié fixement à l'arbre de sélection de boîte de vitesses (3) qui comporte des orbites de roulement (11) s'étendant en direction de l'axe de rotation (5) pour les corps de rouleau (12).

4. Dispositif de sélection de boîte de vitesses selon la revendication 3, **caractérisé en ce que** l'arbre de sélection de boîte de vitesses (3) est relié au fourreau intérieur (10) par le biais d'un ajustage serré.

5. Dispositif de sélection de boîte de vitesses selon la revendication 3, **caractérisé en ce que** l'agencement de palier de roulement (9) comporte en outre un fourreau extérieur (13) entrant en interaction avec le fourreau intérieur (10) par le biais du corps de rouleau (12), ledit fourreau extérieur présentant des orbites de roulement (14) s'étendant en direction de l'axe de rotation (5) pour les corps de rouleau (12).

6. Dispositif de sélection de boîte de vitesses selon la revendication 5, **caractérisé en ce que** le fourreau extérieur (13) s'étend dans le plan axial jusque dans la zone de la masse supplémentaire (6).

7. Dispositif de sélection de boîte de vitesses selon la revendication 6, **caractérisé en ce que** le fourreau extérieur (13) est disposé dans un alésage (15) prévu dans la masse supplémentaire (6) sur au moins une section axiale.

8. Dispositif de sélection de boîte de vitesses selon la revendication 7, **caractérisé en ce que** le fourreau extérieur (13) est disposé dans l'alésage (15) par le biais d'un ajustage serré.

9. Dispositif de sélection de boîte de vitesses selon la revendication 5, **caractérisé en ce que** le fourreau extérieur (13) est entouré au moins en partie par un élément de palier de roulement coulissant (16).

10. Dispositif de sélection de boîte de vitesses selon la revendication 9, **caractérisé en ce que** l'élément de palier de roulement coulissant (16) est disposé concentriquement dans un alésage (17) prévu dans le carter (4).

11. Dispositif de sélection de boîte de vitesses selon la revendication 10, **caractérisé en ce que** l'élément de palier de roulement coulissant (16) est disposé dans l'alésage (17) par le biais d'un ajustage serré.

12. Dispositif de sélection de boîte de vitesses selon la revendication 9, **caractérisé en ce que** l'élément de palier de roulement coulissant (16) comporte une section (18) s'étendant dans le plan radial.

13. Dispositif de sélection de boîte de vitesses selon la revendication 12, **caractérisé en ce que** la section (18) s'étendant dans le plan radial est disposée entre le carter (4) et la masse supplémentaire (6).

14. Dispositif de sélection de boîte de vitesses selon la revendication 3, **caractérisé en ce que** le fourreau intérieur (10) présente des bords de lancement (19) axiaux pour les corps de rouleau (12).

15. Dispositif de sélection de boîte de vitesses selon la revendication 3, **caractérisé en ce que** les corps de rouleau (12) sont des aiguilles.

16. Dispositif de sélection de boîte de vitesses selon la revendication 3, **caractérisé en ce que** les corps de rouleau (12) sont des sphères.
